# EUROPÄISCHE PATENTSCHRIFT

(11) **EP 0 657 765 B1**
(45) Veröffentlichungstag und Bekanntmachung des Hinweises auf die Patenterteilung: **29.08.2001**
(21) Anmeldenummer: 94118821.1
(22) Anmeldetag: 30.11.1994
(51) Int. Cl.: G02F 1/35, H04B 10/12, H04L 7/00

(54) **Optischer Phasenregelkreis**
Optical Phase Locked Loop
Boucle à verrouillage de phase

(30) Priorität: 04.12.1993 DE 4341407
(43) Veröffentlichungstag der Anmeldung: 14.06.1995
(73) Patentinhaber: ALCATEL, 75008 Paris (FR)
(72) Erfinder: Bülow, Henning, D-71638 Ludwigsburg (DE)
(74) Vertreter: Kugler, Hermann, Dipl.-Phys.

(56) Entgegenhaltungen:
- EP-A- 0 619 658
- ELECTRONICS LETTERS, 23 MAY 1991, UK, VOL. 27, NR. 11, PAGE(S) 922 - 924, ISSN 0013-5194 Andrekson P A et al '16 Gbit/s all-optical demultiplexing using four-wave mixing'
- ELECTRONICS LETTERS, 24 SEPT. 1992, UK, VOL. 28, NR. 20, PAGE(S) 1864 - 1866, ISSN 0013-5194 Uchiyama K et al 'Ultrafast polarisation-independent all-optical switching using a polarisation diversity scheme in the nonlinear optical loop mirror'
- ELECTRONICS LETTERS, 17 SEPT. 1993, UK, VOL. 29, NR. 19, PAGE(S) 1708 - 1710, ISSN 0013-5194 Inoue K et al 'Multichannel frequency conversion experiment using fibre four-wave mixing'
- IEEE PHOTONICS TECHNOLOGY LETTERS, JAN. 1992, USA, VOL. 4, NR. 1, PAGE(S) 76 - 79, ISSN 1041-1135 Andrekson P A et al '32 Gb/s optical soliton data transmission over 90 km'
- ELECTRONICS LETTERS, 17 SEPT. 1993, UK, VOL. 29, NR. 19, PAGE(S) 1714 - 1716, ISSN 0013-5194 Kawanishi S et al 'Ultrahigh-speed phaselocked-loop-type clock recovery circuit using a travelling-wave laser diode amplifier as a 50 GHz phase detector'
- ELECTRONICS LETTERS, 12 MAY 1994, UK, VOL. 30, NR. 10, PAGE(S) 800 - 801, ISSN 0013-5194 Kawanishi S et al '100 Gbit/s, 200 km optical transmission experiment using extremely low jitter PLL timing extraction and all-optical demultiplexing based on polarisation insensitive four-wave mixing'
- NTT Review, Vol. 4, No. 6, November 1992, S. 83 bis 91

## Beschreibung

Die Erfindung betrifft einen optischen Phasenvegelkrein nach Anspruch 7 und die Verwendung, eines optischer Mischer in einem optischer Phasenregelkreis nach Anspruch 1.

Die Erfindung steht in Zusammenhang mit optischen Nachrichtenübertragungssystemen, in denen Digitalsignale mit einer hohen Bitfolgefrequenz, z. B. 40 Gbit/s und mehr, übertragen werden sollen. Bei einer solchen hohen Bitfolgefrequenz müssen elektrische Systemkomponenten mit hohem Aufwand optimiert werden. Es ist dabei eine obere Grenzfrequenz absehbar, oberhalb derer einige elektrische Systemkomponenten, z. B. Einrichtungen zur Taktrückgewinnung nicht mehr verwendbar sind.

Eine Einrichtung zur Taktrückgewinnung ist z.B. ein optischer Phasenregelkreis, der z.B. bekannt ist aus: Saruwatari, M. et al, "Optical Signal Processing for Future Communications Networks", NTT Review, Vol. 4, No. 6, November 1992, Seiten 83 bis 91.

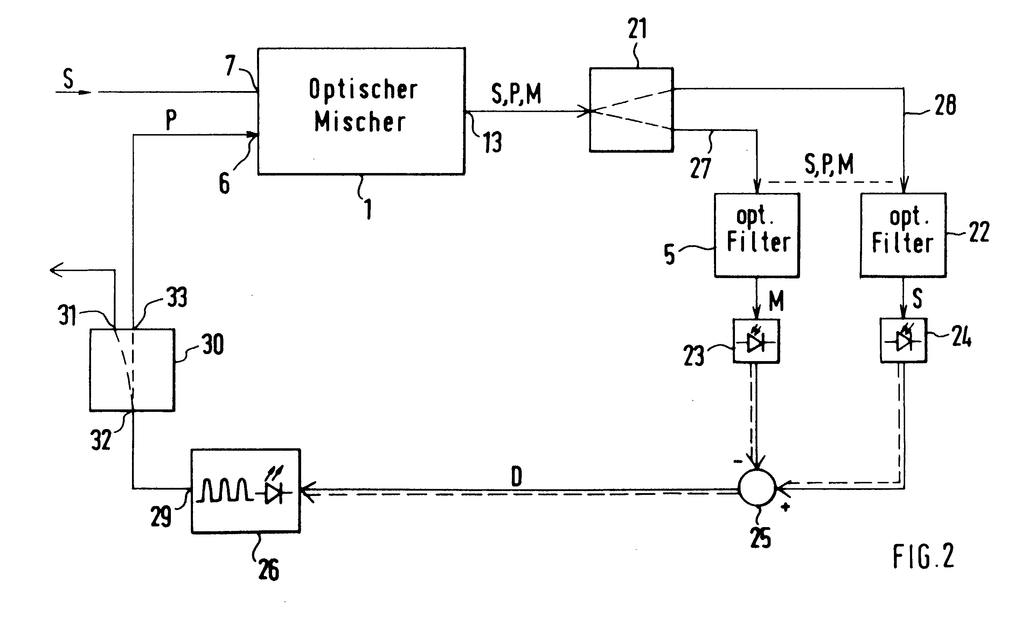

Dort ist in Fig. 2 ein optischer Phasenregelkreis (engl.:
Phase-locked Loop, PLL) gezeigt, der u. a. einen
Laserdiodenverstärker (engl.: laserdiode amplifier, LDA) als
Phasenkomparator, einen Oszillator (VCO) und einen optischen
Taktgenerator hat. Ein experimentelles Ergebnis für ein 10
Gbit/s-Signal ist gezeigt und es wird eine Eignung bis zu 100
Gbit/s erwartet.

Der Laserdiodenverstärker mischt das Signallicht einer Wellenlänge λ₁ mit dem Licht einer Wellenlänge λ₂, das vom optischen Taktgenerator ausgesendet wird. Er ist also ein optischer Mischer für ein Nachrichtenübertragungssystem. Die obere Grenzfrequenz des optischen Phasenregelkreises ist primär durch die Grenzfrequenz des Laserdiodenverstärkers gegeben.

Nachteilig an diesem optischen Phasenregelkreis ist, daß der zum Mischen herangezogene Takt, der vom optischen Taktgenerator erzeugt wird, eine von dem Signallicht leicht unterschiedliche Taktfrequenz hat, nämlich 10,0001 GHz.

Der Erfindung liegt die Aufgabe zugrunde, einen rein optischen vierwellenmischer Für einen optischen Phasenregelkrein einzusetzen. Ein die Aufgabe lösender optischer Phasenregelkreis ist Gegenstand des Anspruchs 7.

Ausgestaltungen der Erfindung sind den Unteransprüchen zu entnehmen.

Ein Vorteil der Erfindung ist, daß der optische Phasenregelkreis für eine sehr hohe Bitfolgefrequenz, z. B. einige 100 Gbit/s, verwendbar ist. Ein weiterer Vorteil der Erfindung ist, daß die Signalpolarisation nicht definiert vorliegen muß; eine aufwendige Polarisationsregelung ist somit nicht notwendig. Somit ist auch der optische Phasenregelkreis polarisationsunabhängig.

In der Erfindung kommt das Prinzip der Vierwellenmischung zur Anwendung. Dieses Prinzip ist z.B. bekannt aus:
Inoue, Kyo: "Four-Wave Mixing in an Optical Fiber in the Zero-Dispersion Wavelength Region", Journal of Lightwave Technology, Vol. 10, No. 11, November 1992, Seiten 1553 bis 1561.

Dort ist ein experimenteller Aufbau gezeigt, mit dem die Vierwellenmischung (engl.: Four-Wave Mixing, FWM) in einer Faser untersucht werden kann. Diese Vierwellenmischung ist eine unerwünschte Störung, die vor allem bei Mehrkanalübertragung zu einer Verschlechterung des Systems führt.

Der experimentelle Aufbau hat u.a. einen Signallichtlaser, einen Pumplichtlaser, einen Koppler und eine zu testende Faser. Das als Ergebnis der in der Faser stattfindenden Mischung entstehende Licht wird mit einem Spektrumanalysator analysiert. Damit die optische Leistung des Signal- und Pumplichts in der Faser groß genug ist, erfolgt vor der Kopplung eine Verstärkung des Signal- und Pumplichts mittels optischer Verstärker. Die dabei stattfindende Mischung wird als "degenerierte Vierwellenmischung" bezeichnet und das entstehende Mischprodukt als "vierte Welle". Damit die optische Leistung des Mischprodukts maximal wird, werden die Polarisationszustände des Signal- und Pumplichts mit Hilfe einer Polarisationsregelung variiert.

Die Erfindung wird nun anhand der Figuren durch Beispiele näher erläutert. Es zeigen:
- Fig. 1: ein Ausführungsbeispiel eines optischen Mischers (1), und
- Fig. 2: eine beispielhafte Verwendung eines optischen Mischers (1) in einem optischen Phasenregelkreis.

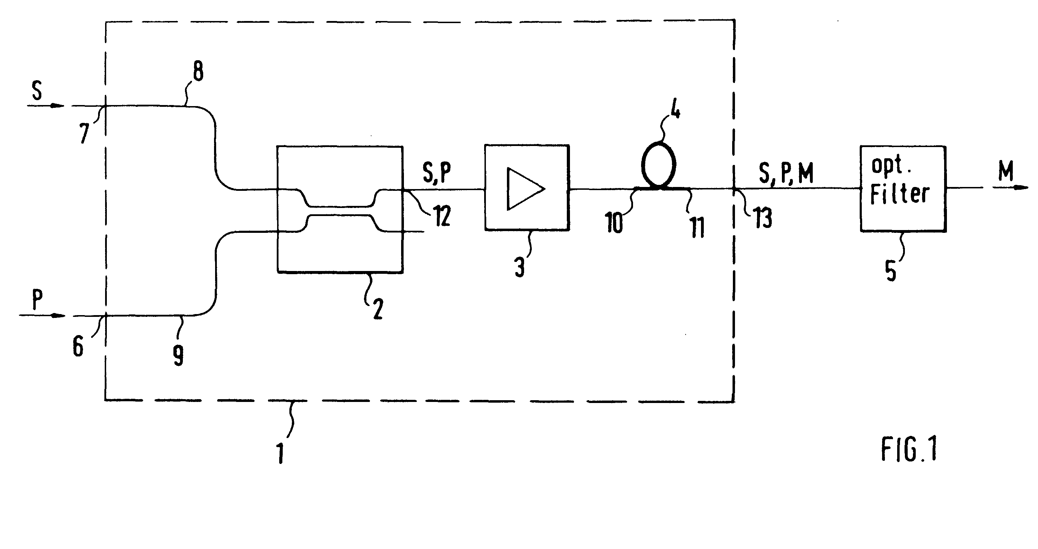

Der in Fig. 1 gezeigte optische Mischer 1 hat einen ersten Eingang 7, dem Signallicht S zugeführt wird, einen zweiten Eingang 6, dem Pumplicht P zugeführt wird, und einen Ausgang 13, an dem das Signallicht S, das Pumplicht P und ein Mischprodukt M zur Verfügung stehen. Entsprechend der Literatur (Inoue, Uyo) wird hier der Begriff "Pumplicht" verwendet, obwohl kein Pumpvorgang stattfindet, wie es bei Halbleiter-Lasern der Fall ist. Das Mischprodukt M entsteht durch Vierwellenmischung, wie bereits ausgeführt wurde. Desweiteren hat der optische Mischer 1 einen Koppler 2, dem das Signallicht S und das Pumplicht P über zwei Zuführungen 8, 9 zugeführt wird, einen optischen Verstärker 3 und ein Lichtwellenleiterstück 4, das zwei Enden 10, 11 hat. Der optische Verstärker 3 der u. U. auch entfallen kann, ist mit einem Ausgang 12 des Kopplers 2 und dem ersten Ende 10 des Lichtwellenleiterstücks 4 verbunden. Der Ausgang 13 des optischen Mischers 1 ist mit einem optischen Filter 5 verbunden, das das Signallicht S und das Pumplicht P sperrt. Der Koppler 2 ist z. B. ein allgemein bekannter Faserkoppler oder ein Wellenlängenmultiplexer.

Das Lichtwellenleiterstück 4 ist polarisationserhaltend, d. h. in ihm bleibt die Polarisation eines optischen Signals während der Ausbreitung unverändert. Polarisationserhaltende Lichtwellenleiterstücke sind bekannt aus: Lutzke, Dieter: "Lichtwellenleiter-Technik", Pflaum Verlag, München 1986, Seiten 69, 70.

Als Lichtwellenleiter zur Realisierung des Lichtwellenleiterstücks 4 sind neben Quarzglasfasern auch solche mit höherer optischer Nichtlinearität, z. B. mit Seltenerd-Elementen oder mit Blei' dotierte Quarz- oder Fluoridglasfasern oder Kunststoffasern (Polymere) verwendbar.

Das Signallicht S und das Pumplicht P haben am Entstehungsort des Lichts eine lineare Polarisation, da sie üblicherweise von einem Halbleiterlaser erzeugt werden. Daß deren Ausgangslicht eine lineare Polarisation hat, ist aus dem angegebenen Buch von Lutzke, Seite 224, bekannt.

Der optische Verstärker 3 dient dazu, die optische Gesamtleistung in dem Lichtwellenleiterstück 4 zu erhöhen. Er kann z. B. ein Erbium dotierter Faserverstärker (EDFA) oder ein Halbleiterlaser-Verstärker sein. Es ist auch möglich, jeweils in den Zuführungen 8, 9 optische Verstärker einzufügen, um die optische Leistung zu erhöhen.

Damit dieser optische Mischer 1 erfindungsgemäß unabhängig von der Signalpolarisation ist, die nach der Übertragung über eine Lichtwellenleiterstrecke beliebig vorliegen kann, wird das Pumplicht P, das eine definierte in einer Ebene liegende lineare Polarisation hat, so in das Lichtwellenleiterstück eingekoppelt, daß seine optische Leistung zu gleichen Teilen auf die Hauptachsen des Lichtwellenleiterstücks aufgeteilt ist. Dies kann dadurch erreicht werden, daß seine Polarisationsebene mit den Hauptachsen des Lichtwellenleiterstückes einen Winkel von ca. 45° einschließt. Diese Orientierung der Polarisationsebene des in das Lichtwellenleiterstück 4 eingekoppelten Pumplichts relativ zu den Hauptachsen kann entweder direkt am ersten Ende 10 des Lichtwellenleiterstücks 4 oder bereits vor dem Koppler 2 innerhalb der zweiten Zuführung 9 festgelgt sein. Im letzten Fall, darf sich die Polarisation des Pumplichts P im weiteren Verlauf nicht mehr ändern; der Koppler 2 und der optische Verstärker 3 müssen deshalb polarisationserhaltend sein. Die genannte Orientierung der Polarität ist z.B. dadurch festgelegt, daß zwei polarisationserhaltende Lichtwellenleiter zusammengespleißt sind, wobei einer um die Längsachse um 45° gedreht ist.

In Fig. 2 ist eine Verwendung des in Fig. 1 gezeigten optischen Mischers in einem optischen Phasenregelkreis (engl.: Phase-locked loop, PLL) gezeigt. Das Pumplicht P ist hier eine Folge von optischen Impulsen, die mit einstellbarer Wiederholfrequenz auftreten. Das Signallicht ist ebenfalls eine Folge von optischen Impulsen, allerdings mit vorgegebener Wiederholfrequenz, auch Impulsfrequenz genannt. Die Aufgabe dieses optischen Phasenregelkreises ist, die lokale Taktfrequenz des Regelkreises, diese entspricht der Wiederholfrequenz des Pumplichts P, an die Impulsfrequenz des Signallichts S phasenstarr anzukoppeln, zu synchronisieren.

Dieser optische PLL hat als Bestandteile einen optischen Mischer 1, zwei Koppler 21, 30, zwei optische Filter 5, 22, zwei Photodetektoren 23, 24, einen Subtrahierer 25 und einen optischen Taktgenerator 26, der einen Ausgang 29 hat.

Diese Bestandteile haben folgende Anordnung und Funktionen:
- Der Koppler 21 ist mit dem Ausgang des optischen Mischers 1 verbunden und teilt das aus dem Signallicht S, dem Pumplicht P und dem Mischprodukt M zusammengesetzte Augangslicht des optischen Mischers 1 zu gleichen Teilen auf zwei Zweige 27, 28 auf.
- In einem Zweig sind das erste optische Filter 5, das das Signallicht S und das Pumplicht P sperrt, und der damit verbundene erste Photodetektor 23, der ein dem Mischprodukt M entsprechendes elektrisches Signal abgibt, angeordnet.
- In dem anderen Zweig sind das zweite optische Filter 22, das das Pumplicht P und das Mischprodukt M sperrt, und der damit verbundene zweite Photodetektor 24 angeordnet.
- Beide Zweige 27, 28 enden an dem Subtrahierer 25, der ein zum optischen Taktgenerator 26 geführtes Differenzsignal D abgibt,
- Der Ausgang 29 des optischen Taktgenerators 26 ist mit einem Eingang 26 des zweiten Kopplers 30 verbunden, der zwei Ausgänge 31, 33 hat, wobei einer mit einem Eingang 6 des optischen Mischers 1 verbunden ist. Ein Teil des vom optischen Taktgenerator 26 ausgesendeten optischen Takts wird somit dem optischen Mischer 1 als Pumplicht P zugeführt. Ein anderer Teil ist der durch den Phasenregelkreis mit dem Takt des Signallicht synchronisierte vom optischen Taktgenerator zu erzeugende optische Takt.

Die Photodetektoren 23, 24 wandeln die optischen Leistungen des Signallichts S und des Mischprodukts M in elektrische Signale um. Verbindungen zwischen den einzelnen Bestandteilen, über die keine optische Übertragung sondern eine elektrische Übertragung erfolgt, sind zur Verdeutlichung durch zusätzliche gestrichelte Linien gekennzeichnet.

Der Subtrahierer 25 bildet die Differenz der optischen Leistungen des Signallichts S und des Mischprodukts M. Dabei stellt das Signallicht S ein Referenzsignal dar, mit dem das Mischprodukt M verglichen wird. Eine Änderung des aus dem Subtrahierer 25 hervorgehenden Differenzsignals D wird somit durch eine Änderung der optischen Leistung des Mischprodukts M verursacht. Da sich die optische Leistung des Mischprodukts M nur aufgrund einer Änderung des Phasenunterschieds zwischen der Signallicht-Impulsfolge und der Pumplicht-Impulsfolge verändert, kann mit dem Differenzsignal D der optische Taktgenerator 26 gesteuert werden, dessen Ausgangssignal das Pumlicht P darstellt. Der optische Taktgenerator 26 ist beispielsweise eine Laserdiode, die von einem elektronischen Impulsgenerator erzeugte Stromimpulse in Lichtimpulse umwandelt. Ein solcher Taktgenerator ist z. B. bekannt aus: Kawanishi, S. et al, "Ultrahigh-speed phaselocked-loop-type clock recovery circuit using a travelling-wave laser diode amplifier as a 50 GHz phase detector", Electronics Letters, 16th September 1993, Vol. 29, No. 19, Seiten 1714 bis 1716.

Die Wiederholfrequenz der Impulse des Pumplichts P wird abhängig von dem Differenzsignal D so lange variiert, bis das Signallicht S und das Pumplicht P synchronisiert sind. Dieser optische Phasenregelkreis ist beispielsweise so ausgelegt, daß mit zunehmendem Differenzsignal D auch die Wiederholfrequenz zunimmt.

Der erste Koppler 21, der erste 27 und zweite Zweig 28, das erste 5 und zweite optische Filter 22, der erste 23 und zweite Photodetektor 24 und der Substrahierer 25 bilden zusammen einen Steuerungsteil, in dem das elektrische Steuersignal D abgeleitet wird, das einer Intensitätsdifferenz zwischen dem Signallicht S und dem Mischprodukt M entspricht.

Mit der Angabe des optischen Phasenregelkreises, der einen optischen Mischer enthält, ist auch dessen Verwendung in einem optischen Phasenregelkreis angegeben.

Eine weitere Verwendung des optischen Mischers besteht darin, ihn zum polarisationsunabhängigen optischen Abtasten eines unbekannten Signals zu verwenden. Dazu wird dem optischen Mischer das unbekannte Signal als Signallicht S und das Pumplicht P zugeführt. Das Pumplicht P besteht dabei aus sehr kurzen optischen Impulsen.

In dem optischen Mischer entsteht wiederum das Mischprodukt, dessen optische Leistung hier hauptsächlich von der optischen Leistung des unbekannten Signals abhängt. Das unbekannte Signal wird also zeitdiskret mit sehr kurzen optischen Impulsen abgetastet, so daß mit jedem optischen Impuls ein Mischprodukt entsteht, dessen optische Leistung die optische Leistung des unbekannten Signals zu diesem Zeitpunkt darstellt. Somit kann der zeitliche Verlauf der optischen Leistung des unbekannten Signals nachgebildet werden.

Der polarisationsunabhängige optische Mischer läßt sich auch für eine bitgenaue Synchronisation schneller optischer Add/Drop-Multiplexer verwenden. Als optischer Schalter kann dabei z. B. ein nichtlinearer optischer Faserschleifenspiegel (engl.: nonlinear optical fibre loop mirror, NOLM) verwendet werden.

## Patentansprüche

1. Verwendung eines optischen Mischers (1) in einem optischen Phasenregelkreis, der als mischendes Element ein polarisationserhaltendes Lichtwellenleiterstück (4) enthält, einen Koppler (2) zum Einkoppeln von Signallicht (S) und von Pumplicht (P) in ein erstes Ende (10) des Lichtwellenleiterstücks (4), aus dessen zweitem Ende (11) das Signallicht (S), das Pumplicht (P) und ein daraus entstehendes Mischprodukt (M) austreten, voobei das Pumplicht (P), das eine lineare Polarisation hat, so in das Lichtwellenleiterstück (4) eingekoppelt wird, daß seine Polarisationsrichtung mit den Hauptachsen des Lichtwellenleiterstücks (4) einen Winkel von ca. 45° einschließt.

2. Verwendung eines optischen Mischers nach Anspruch 1 bei der von aus dem optischen Mischer (1) austretendem, aus dem Signallicht (S), dem Pumplicht (P) und dem Mischprodukt (M) zusammengesetztem Licht in einem Steuerungsteil (21, 27, 28, 5, 22, 23, 24, 25) ein elektrisches Steuersignal (D) für einen optischen Taktgenerator (26) abgeleitet wird, das einer Intensitätsdifferenz zwischen dem im Ausgangslicht des optischen Mischers (1) enthaltenen Signallicht (S) und dem darin enthaltenen Mischprodukt (M) entspricht, und ein Teil des vom optischen Taktgenerator (26) ausgesendeten optischen Takts dem optischen Mischer (1) als Pumplicht (P) zugeführt wird.

3. Verwendung eiens optischen Mischers (1) nach Anspruch 1, **dadurch gekennzeichnet**, daß mit dem zweiten Ende (11) des Lichtwellenleiterstücks (4) ein optisches Filter (5) verbunden ist, das das Signallicht (S) und das Pumplicht (P) sperrt.

4. Verwendung eines optischen Mischers (1) nach Anspruch 1, **dadurch gekennzeichnet**, daß das Lichtwellenleiterstück (4) aus Kunststoff ist.

5. Verwendung eines optischen Mischers (1) nach Anspruch 1, **dadurch gekennzeichnet**, daß das Lichtwellenleiterstück (4) mit einem Seltenerd-Element dotiert ist.

6. Verwendung eines optischen Mischers (1) nach Anspruch 1, **dadurch gekennzeichnet**, daß das Lichtwellenleiterstück (4) mit Blei dotiert ist.

7. Optischer Phasenregelkreis mit einem optischen Taktgenerator (26) mit er einem optischen Mischer (1) der als mischendes Element ein Lichtwellenleiterstück (4) enthält, mit einem Koppler (2) zum Einkoppeln von Signallicht (S) und von Pumplicht (P) in ein erstes Ende (10) des Lichtwellenleiterstücks (4), aus dessen zweitem Ende (11) das Signallicht (S), das Pumplicht (P) und ein daraus entstehendes Mischprodukt (M) austreten, wobei das Lichtwellenleiterstück (4) polarisationserhaltend ist und das Pumplicht (P), das eine lineare Polarisation hat, so in das Lichtwellenleiterstück (4) eingekoppelt wird, daß seine Polarisationsrichtung mit den Hauptachsen des Lichtwellenleiterstücks (4) einen Winkel von ca. 45° einschließt, und mit einem Steuerungsteil (21, 27, 28, 5, 22, 23, 24, 25) der ein von dem optischen Mischer (1) austretendes, aus einem Signallicht (S), einem Pumplicht (P) und einem Mischprodukt (M) zusammengesetztes Licht in ein elektrisches Steuersignal (D) umwandelt, wobei dieses Steuersignal (D) einer Intensitätsdifferenz zwischen dem Signallicht (S) und dem Mischprodukt (M) entspricht, und der vom Steuersignal (D) gesteuerte optische Taktgenerator (26) mit dem optischen Mischer (1) verbunden ist, so daß diesem ein Teil des optischen Takts als Pumplicht (P) zugeführt wird.

## Claims

1. Use of an optical mixer (1) in an optical phase-locked loop comprising a length of polarization-maintaining optical waveguide (4) as a mixing element and a coupler (2) for coupling signal light (S) and pump light (P) into a first end (10) of the length of optical waveguide (4), from whose second end (11) emerge the signal light (S), the pump light (P), and a mixing product (M) thereof, the pump light (P), which is plane-polarized, being coupled into the length of optical waveguide (4) in such a way that its plane of polarization makes an angle of approximately 45° with the principal axes of the length of optical waveguide (4).

2. Use of an optical mixer (1) as claimed in claim 1 wherein in a control section (21, 27, 28, 5, 22, 23, 24, 25), an electric control signal (D) for an optical clock generator (26) is derived from light emerging from the optical mixer (1), which is composed of the signal light (S), the pump light (P), and the mixing product (M), said electric control signal (D) corresponding to an intensity difference between the signal light (S) contained in the output light of the optical mixer (1) and the mixing product (M) contained in the signal light, and wherein a portion of the optical clock signal emitted by the optical clock generator (26) is fed as the pump light (P) to the optical mixer (1).

3. Use of an optical mixer (1) as claimed in claim 1, **characterized in that** the second end (11) of the length of optical waveguide (4) is connected to an optical filter (5) which blocks the signal light (S) and the pump light (P).

4. Use of an optical mixer (1) as claimed in claim 1, **characterized in that** the length of optical waveguide (4) is of plastic.

5. Use of an optical mixer (1) as claimed in claim 1, **characterized in that** the length of optical waveguide (4) is doped with a rare-earth element.

6. Use of an optical mixer (1) as claimed in claim 1, **characterized in that** the length of optical waveguide (4) is doped with lead.

7. An optical phase-locked loop comprising an optical clock generator (26), an optical mixer (1) comprising a length of polarization-maintaining optical waveguide (4) as a mixing element and a coupler (2) for coupling signal light (S) and pump light (P) into a first end (10) of the length of optical waveguide (4), from whose second end (11) emerge the signal light (S), the pump light (P), and a mixing product (M) thereof, the pump light (P), which is plane-polarized, being coupled into the length of optical waveguide (4) in such a way that its plane of polarization makes an angle of approximately 45° with the principal axes of the length of optical waveguide (4), and a control section (21, 27, 28, 5, 22, 23, 24, 25) which converts light emerging from the optical mixer (1) and composed of signal light (S), pump light (P), and a mixing product (M) into an electric control signal (D) corresponding to an intensity difference between the signal light (S) and the mixing product (M), the optical clock generator (26), which is controlled by the control signal (D), being connected to the optical mixer (1), so that the latter receives a portion of the optical clock signal as the pump light (P).

## Revendications

1. Utilisation d'un mélangeur (1) optique dans un circuit optique de réglage de phase, qui contient comme élément mélangeant un bout de guide d'ondes optiques qui reçoit la polarisation, un coupleur (2) pour l'injection de la lumière de signalisation (S) et de la lumière de pompage (P) dans une première extrémité (10) du bout de guide d'ondes optiques (4), de la deuxième extrémité (11) duquel sortent la lumière de signalisation (S), la lumière de pompage (P) et un produit de mélange (M) formé sur cette base, la lumière de pompage (P), qui a une polarisation linéaire, étant injectée dans le bout du guide d'ondes optiques (4) de telle façon que son sens de polarisation forme un angle d'environ 45° avec les axes principaux du bout de guide d'ondes optiques (4).

2. Utilisation d'un mélangeur optique selon la revendication 1, avec lequel un signal de commande (D) électrique pour un générateur optique de rythme (26) est dérivé de lumière sortant du mélangeur (1) optique, composée de la lumière de signalisation (S), de la lumière de pompage (P) et du produit de mélange (M) dans une partie de commande (21, 27, 28, 5, 22, 23, 24, 25), lequel signal correspond à une différence d'intensité entre la lumière de signalisation (S) contenue dans la lumière de sortie du mélangeur (1) optique et le produit de mélange (M) inclus dedans, et une partie du rythme optique émis par le générateur optique de rythme (26) est amenée au mélangeur (1) optique comme lumière de pompage (P)

3. Utilisation d'un mélangeur (1) optique selon la revendication 1, **caractérisé en ce qu**'un filtre (5) optique, qui bloque la lumière de signalisation (S) et la lumière de pompage (P) est relié à la deuxième extrémité (11) du bout de guide d'ondes optiques (4).

4. Utilisation d'un mélangeur (1) optique selon la revendication 1, **caractérisé en ce que** le bout de guide d'ondes optiques (4) est en plastique.

5. Utilisation d'un mélangeur (1) optique selon la revendication 1, **caractérisé en ce que** le bout de guide d'ondes optiques (4) est dopé avec un élément de terres rares.

6. Utilisation d'un mélangeur (1) optique selon la revendication 1, **caractérisé en ce que** le bout de guide d'ondes optiques (4) est dopé avec du plomb.

7. Circuit optique de réglage de phase avec un générateur optique de rythme (26) avec un mélangeur (1) optique, qui contient un bout de guide d'ondes optiques comme élément mélangeant, avec un coupleur (2) pour l'injection de lumière de signalisation (S) et de lumière de pompage (P) dans une première extrémité (10) du bout de guide d'ondes optiques (4), de la deuxième extrémité (11) duquel sortent la lumière de signalisation (S), la lumière de pompage (P) et un produit de mélange (M) qui en résulte, le bout de guide d'ondes optiques (4) recevant une polarisation et la lumière de pompage (P), qui a une polarisation linéaire, étant injecté dans le bout du guide d'ondes optiques (4) de façon que son sens de polarisation forme un angle d'environ 45° avec les axes principaux du bout de guide d'ondes optiques (4), et avec une partie de commande (21, 27, 28, 5, 22, 23, 24, 25), qui convertit une lumière sortant du mélangeur (1) optique, composée d'une lumière de signalisation (S), d'une lumière de pompage (P) et d'un produit de mélange (1) en un signal de commande électrique, ce signal de commande (D) correspondant à une différence d'intensité entre la lumière de signalisation (S) et le produit de mélange (M), et le générateur de rythme (26) optique commandé par le signal de commande (D) étant relié au mélangeur (1) optique, de façon qu'une partie du rythme optique soit amenée à ce mélangeur sous la forme de lumière de pompage (P).
